# EUROPÄISCHE PATENTANMELDUNG

(11) **EP 2 095 894 A1**
(43) Veröffentlichungstag der Anmeldung: **02.09.2009**
(21) Anmeldenummer: 08003588.4
(22) Anmeldetag: 27.02.2008
(51) Int. Cl.: B22C 21/14, B23H 9/10, B23K 26/38, F01D 5/18

(54) **Verfahren zur Herstellung einer innengekühlten Turbinenschaufel**

(71) Anmelder: SIEMENS AKTIENGESELLSCHAFT, 80333 München (DE)
(72) Erfinder: Händler, Michael, 40699 Erkrath (DE); Lerner, Christian, 45701 Herten (DE)

(57) **Zusammenfassung**

Bei einem Verfahren zur Herstellung einer innengekühlten Turbinenschaufel (15) mit einer sogseitigen und einer druckseitigen Schaufelwand (27, 28), die keilförmig auf eine gemeinsame Hinterkante (22) zulaufen, bei dem ein Hohlraum (26) einer Gussform, die eine Außenform und einen Gusskern (24) aufweist, mit einem Schaufelwerkstoff ausgegossen wird, wobei nach dem Aushärten der Turbinenschaufel (15) im Bereich der Hinterkante (22) eine Anzahl von Auslasskanälen (29) für ein Kühlmedium von außen eingebracht wird, soll bei Verwendung in einer Gasturbine (1) ein besonders hoher Wirkungsgrad ermöglicht werden. Dazu sind die Austrittsöffnungen der Auslasskanäle (29) in Bezug auf die Hinterkante (22) zur druckseitigen Schaufelwand hin versetzt angeordnet.

## Beschreibung

Die Erfindung bezieht sich auf ein Verfahren zur Herstellung einer innengekühlten Turbinenschaufel mit einer sogseitigen und einer druckseitigen Schaufelwand, die keilförmig auf eine gemeinsame Hinterkante zulaufen, bei dem ein Hohlraum einer Gussform, die eine Außenform und einen Gusskern aufweist, mit einem Schaufelwerkstoff ausgegossen wird, wobei nach dem Aushärten der Turbinenschaufel im Bereich der Hinterkante eine Anzahl von Auslasskanälen für ein Kühlmedium von außen eingebracht wird.

Gasturbinen werden in vielen Bereichen zum Antrieb von Generatoren oder von Arbeitsmaschinen eingesetzt. Dabei wird der Energieinhalt eines Brennstoffs zur Erzeugung einer Rotationsbewegung einer Turbinenwelle genutzt. Der Brennstoff wird dazu in einer Anzahl von Brennern verbrannt, wobei von einem Luftverdichter verdichtete Luft zugeführt wird. Durch die Verbrennung des Brennstoffs wird ein unter hohem Druck stehendes Arbeitsmedium mit einer hohen Temperatur erzeugt. Dieses Arbeitsmedium wird in eine dem jeweiligen Brenner nachgeschaltete Turbineneinheit geführt, wo es sich arbeitsleistend entspannt.

Die Turbineneinheit einer Gasturbine weist zur Impulsübertragung des Arbeitsmediums auf die Turbinenwelle eine Anzahl von mit der Turbinenwelle verbundenen, rotierbaren Laufschaufeln auf. Die Laufschaufeln sind dazu kranzförmig an der Turbinenwelle angeordnet und bilden somit eine Anzahl von Laufschaufelkränzen oder Laufschaufelreihen. Die Turbine und der Verdichter sind auf einer gemeinsamen, auch als Turbinenläufer bezeichneten Turbinenwelle angeordnet, mit der auch der Generator bzw. die Arbeitsmaschine verbunden ist, und die um ihre Mittelachse drehbar gelagert ist.

Weiterhin umfasst die Turbineneinheit üblicherweise eine Anzahl von feststehenden Leitschaufeln, die ebenfalls kranzförmig unter der Bildung von Leitschaufelkränzen oder Leitschaufelreihen an einem Innengehäuse oder dem Stator der Turbine befestigt sind. Die Laufschaufeln dienen dabei zum Antrieb der Turbinenwelle durch Impulsübertrag vom die Turbine durchströmenden Arbeitsmedium. Die Leitschaufeln dienen hingegen zur Strömungsführung des Arbeitsmediums zwischen jeweils zwei in Strömungsrichtung des Arbeitsmediums gesehen aufeinander folgenden Laufschaufelreihen oder Laufschaufelkränzen. Ein aufeinander folgendes Paar aus einem Kranz von Leitschaufeln oder einer Leitschaufelreihe und aus einem Kranz von Laufschaufeln oder einer Laufschaufelreihe wird dabei auch als Turbinenstufe bezeichnet.

Eine Leitschaufel weist in der Regel eine auch als Schaufelfuß bezeichnete Plattform auf, die zur Fixierung der jeweiligen Leitschaufel am Innengehäuse der Turbine als Wandelement angeordnet ist und die die äußere Begrenzung eines Heißgaskanals für das die Turbine durchströmende Arbeitsmedium bildet. Für eine effiziente Strömungsführung des Arbeitsmediums in Richtung auf die sich einer Leitschaufelreihe anschließenden Laufschaufelreihe weist eine der Leitschaufelreihe zugeordnete Leitschaufel üblicherweise ein gewölbtes, flügelförmiges Querschnittsprofil auf, so dass bei möglichst gering gehaltenen Reibungsverlusten an der jeweiligen Leitschaufel sich die vorgesehene Strömungsführung einstellt und somit die Leitschaufelreihe bzw. die ihr zugeordnete Turbinenstufe einen möglichst hohen Wirkungsgrad besitzt. Dazu weist die Vorderkante einer Leitschaufel einen runden Querschnitt auf, der sich zur keilförmig zulaufenden Hinterkante der Leitschaufel verjüngt. Die Schaufelwand, auf die die zu lenkende Strömung dabei in einem gegebenen Winkel trifft, bildet dabei die druckseitige Schaufelwand, die gegenüberliegende die sogseitige Schaufelwand.

Eine Laufschaufel ist ähnlich geformt, wobei in der Regel spezifische Details wie etwa die maximale Profildicke, der Krümmungsradius an der Vorderkante usw. an den Einsatzzweck angepasst, d. h. für eine besonders effiziente Impulsübertragung vom Arbeitsmedium auf die jeweilige Laufschaufel optimiert sind.

Bei der Auslegung oben beschriebener Gasturbinen ist zusätzlich zur erreichbaren Leistung üblicherweise ein besonders hoher Wirkungsgrad ein Auslegungsziel. Eine Erhöhung des Wirkungsgrades lässt sich dabei aus thermodynamischen Gründen grundsätzlich durch eine Erhöhung der Temperatur erreichen, mit dem das Arbeitsmedium von der Brennkammer ab- und in die Turbineneinheit einströmt. Daher werden Temperaturen von etwa 1200°C bis 1500°C für derartige Gasturbinen angestrebt und auch erreicht.

Bei derartig hohen Temperaturen des Arbeitsmediums sind jedoch die diesem Medium ausgesetzten Komponenten und Bauteile hohen thermischen Belastungen ausgesetzt. Um dennoch bei hoher Zuverlässigkeit eine vergleichsweise lange Lebensdauer der betroffenen Komponenten zu gewährleisten, ist üblicherweise eine Kühlung der betroffenen Komponenten, insbesondere der Turbinenschaufeln, notwendig. Um thermische Verspannungen des Materials zu verhindern, welche die Lebensdauer der Komponenten begrenzen, wird in der Regel angestrebt, eine möglichst gleichmäßige Kühlung der Komponenten zu erreichen. Als Kühlmittel kommt dabei üblicherweise Kühlluft zum Einsatz, auf die die Wärme der zu kühlenden Bauteile übertragen wird. Dabei kann die Kühlluft bei der so genannten Prallkühlung im Wesentlichen senkrecht auf eine zu kühlende Fläche geleitet werden oder bei der so genannten Filmkühlung entlang der zu kühlenden Fläche, d. h. im Wesentlichen tangential zu ihr, geführt werden. Weiterhin können zur konvektiven Kühlung von Turbinenkomponenten in diese integrierte Kühlluftkanäle vorgesehen sein. Schließlich lassen sich die verschiedenen Kühlkonzepte auch miteinander kombinieren.

Zur Kühlung der thermisch besonders stark belasteten Turbinenschaufeln, insbesondere der Leitschaufeln, wird üblicherweise Kühlluft in deren Inneres geleitet, so dass die Wände der jeweiligen Turbinenschaufel von innen her gekühlt werden. Bei einer geschlossenen Kühlung wird dabei die eingeleitete Kühlluft wieder ausgeleitet, über einen Wärmetauscher abgekühlt und wieder erneut in die Turbinenschaufel geleitet, so dass sich ein geschlossener Kühlkreislauf bildet.

Insbesondere im Bereich der Hinterkante kann jedoch bedingt durch die einzuhaltenden Mindestwandstärken der Turbinenschaufelwand in Verbindung mit der Keilform des Hinterkantenprofils der Hohlraum in der Turbinenschaufel nicht nahe genug an die Hinterkante ausgedehnt werden, um eine ausreichende Kühlung der Hinterkante zu gewährleisten. Daher können an der Hinterkante Öffnungen für die Durchleitung von Kühlmedium vorgesehen sein, so dass in diesem Bereich eine Kühlung der Turbinenschaufel erfolgen kann. Zumindest ein Teil dieser Kühlluft wird dabei durch die Austrittsöffnungen in Strömungsrichtung des Arbeitsmediums nach hinten aus der Hinterkante der Turbinenschaufel aus dem Schaufelinneren herausgeblasen. Dieses Kühlkonzept wird als offene Kühlung bezeichnet.

Für eine derartige Gestaltung der Hinterkante der Turbinenschaufel sind verschiedene Konzepte bekannt. Zur Einbringung der Öffnungen für den Austritt von Kühlmedium kann beispielsweise schon die Gussform für die Turbinenschaufel derart beschaffen sein, dass der Gusskern im Bereich der Hinterkante mit der Außenform verbunden ist. Dabei entstehen je nach Form der Verbindung eine oder mehrere Öffnungen zwischen druckseitiger und sogseitiger Schaufelwand, durch die entsprechend das Kühlmedium austreten kann.

Zur Beibehaltung der aerodynamisch besonders günstigen Kontur auf der Saugseite des Schaufelblatts wird dabei die ursprünglich im Hinterkantenbereich mit der saugseitigen Schaufelwand keilförmig zusammenlaufende druckseitige Schaufelwand so weit zurückgeschnitten, dass der über die Endkante der druckseitigen Schaufelwand überstehende Abschnitt der saugseitigen Schaufelwand eine so genannte Hinterkantenfahne mit geringer Dicke bildet. Diese Hinterkantengestaltung wird auch als "Cut-Back-Hinterkante" bezeichnet. Je nach Hersteller sind auch noch andere Bezeichnungen geläufig, wie z. B. "Pressure-Side-Bleed".

Allerdings muss die Verbindung zwischen Außenform und Gusskern aufgrund der hohen thermischen Belastungen beim Gießprozess eine gewisse Mindestdicke haben, so dass auch die entstehende Öffnung entsprechend vergleichsweise groß ausfällt. Durch diese vorgegebene Mindestgröße der Öffnung zwischen druckseitiger und sogseitiger Schaufelwand ist ein Mindestkühlluftmassenstrom vorgegeben, der zu einem erhöhten Kühlluftverbrauch führen kann und zu einer zu starken Kühlung des die Turbinenschaufeln umströmenden Gases, was eine Verminderung des Wirkungsgrades der Gasturbine zur Folge haben kann.

In einem alternativen Herstellungskonzept können die Öffnungen in die Hinterkante stattdessen erst nach dem Gussprozess eingebracht werden, beispielsweise durch Bohrung. Durch dieses Konzept ist ein vergleichsweise geringer Gesamtquerschnitt der Öffnungen erreichbar und es ist ein geringerer und besser dosierbarer Kühlluftmassenstrom im Betrieb erreichbar als bei einer während des Gussprozesses entstandenen Öffnung. Diese Ausführungsform wird als "gebohrte Hinterkante" bezeichnet.

Eine Einbringung der Öffnungen nach dem Gussprozess erfordert jedoch eine gewisse Mindestdicke der Hinterkante, da sonst beim Einbringen der Öffnungen Beschädigungen der Turbinenschaufeln nicht ausgeschlossen werden könnten. Eine derartige Mindestdicke der Hinterkante kann jedoch zu schlechteren aerodynamischen Eigenschaften der Turbinenschaufel führen, die einen vergleichsweise geringeren Wirkungsgrad der Gasturbine zur Folge haben können.

Der Erfindung liegt daher die Aufgabe zugrunde, ein Verfahren zur Herstellung einer innengekühlten Turbinenschaufel der oben genannten Art anzugeben, die bei Verwendung in einer Gasturbine einen besonders hohen Wirkungsgrad ermöglicht.

Bezüglich des Verfahrens wird die Aufgabe erfindungsgemäß gelöst, indem die Austrittsöffnungen der Auslasskanäle in Bezug auf die Hinterkante zur druckseitigen Schaufelwand hin versetzt angeordnet sind.

Die Erfindung geht dabei von der Überlegung aus, dass ein besonders hoher Wirkungsgrad der Gasturbine durch eine aerodynamisch günstige Form der Turbinenschaufeln erreicht werden kann. Dazu sollte insbesondere die Hinterkante der Turbinenschaufel besonders dünn sein. Eine dünne Hinterkante kann jedoch bei einer Einbringung der Austrittskanäle für das Kühlmedium nach dem Guss beschädigt werden. Als Alternative könnten die Kühlkanäle während des Gussprozesses eingebracht werden. Dabei wären aber die entstehenden Querschnitte der Kühlkanäle größer und der Kühlluftstrom schlechter dosierbar, was zu einer zu starken Kühlung des Arbeitsmediums führen und den Wirkungsgrad der Gasturbine verringern kann. Um die Einbringung der Austrittskanäle für das Kühlmedium erst nach dem Gussprozess zu ermöglichen, ohne die Hinterkante der Turbinenschaufel zu beschädigen, sollten daher die Austrittsöffnungen der Auslasskanäle in Bezug auf die Hinterkante zur druckseitigen Schaufelwand hin versetzt angeordnet werden.

Während des Gussprozesses ist die Lage des Gusskerns in der Außenform gewissen Toleranzen unterworfen. Dies kann zu Problemen bei der exakten Ausrichtung der Auslasskanäle während des Einbringens führen. In vorteilhafter Ausgestaltung sind daher eine Anzahl von Fortsätzen des Gusskerns vorgesehen, die mit der Außenform derart verbunden sind, dass die durch die Fortsätze beim Guss entstehenden Öffnungen in der Turbinenschaufel in Bezug auf die Hinterkante zur druckseitigen Schaufelwand hin versetzt angeordnet sind. Durch die Verbindung des Gusskerns mit der Außenform wird die Lage des Gusskerns während des Gussprozesses stabilisiert. Die beim Guss dadurch entstehenden Öffnungen tragen zudem zur Kühlung der Hinterkante der Turbinenschaufel im Betrieb bei und lassen nach der Herstellung der Turbinenschaufel Rückschlüsse auf die endgültige Lage des Gusskerns und des dadurch entstandenen Hohlraums zu.

In weiterer vorteilhafter Ausgestaltung werden die entstehenden Öffnungen in der Turbinenschaufel zur Ausrichtung eines Werkzeugs zur Einbringung der Auslasskanäle für das Kühlmedium verwendet. Dadurch ist eine exaktere Positionierung der Auslasskanäle möglich, die eine bessere Kühlluftdurchströmung und somit eine bessere Kühlung insbesondere der Hinterkante der Turbinenschaufel zur Folge hat. Die nachträglich von Außen eingebrachten Auslasskanäle können somit immer im Inneren der Turbinenschaufel im Hohlraum enden. Sacklöcherartige und nicht vollständig im Hohlraum mündende Auslasskanäle werden vermieden.

Um eine ausreichende Stabilität der Turbinenschaufel im Betrieb der Gasturbine zu gewährleisten, werden vorteilhafterweise die Auslasskanäle für das Kühlmedium derart positioniert, dass eine Mindestwandstärke der sogseitigen Schaufelwand eingehalten wird. Dabei ist diese Mindestwandstärke durch eine im Betrieb vorgesehene maximale mechanische Belastung bestimmt. Durch die Einhaltung einer derartigen Mindestwandstärke bei der Einbringung der Auslasskanäle für das Kühlmedium wird eine Entstehung von zu dünnen und damit für die strukturelle Integrität der Turbinenschaufel gefährlichen Bereichen der sogseitigen Schaufelwand konsequent vermieden. Dies hat eine insgesamt längere Lebensdauer der Turbinenschaufel zur Folge und bedingt somit eine geringere Reparaturanfälligkeit der Gasturbine.

Um eine besonders gleichmäßige Dicke der sogseitigen Schaufelwand zu erreichen, wird der jeweilige Auslasskanal vorteilhafterweise parallel zur sogseitigen Schaufelwand ausgerichtet. Durch diese Maßnahme wird eine besonders gleichmäßige Stabilität der Turbinenschaufel über die gesamte sogseitige Schaufelwand erreicht, wodurch insgesamt die Lebensdauer der Turbinenschaufel weiter erhöht wird.

Zum besonders einfachen Einbringen der Auslasskanäle in die Turbinenschaufel wird der jeweilige Auslasskanal vorzugsweise durch ein Erosionsverfahren in die Turbinenschaufel eingebracht. Da Turbinenschaufeln aufgrund der vergleichsweise hohen thermischen Belastung im Betrieb üblicherweise aus einem sehr harten und daher mechanisch vergleichsweise schwer zu bearbeitenden Material bestehen, kann beispielsweise auf das Funkenerosionsverfahren zurückgegriffen werden. Dabei wird das Werkstück - die Turbinenschaufel - in ein nicht leitendes Medium eingebracht und ein Werkzeug in Form einer Elektrode in die Nähe des Werkstücks gebracht, wobei eine elektrische Spannung zwischen dem Werkstück und dem Werkzeug angelegt wird. Das Werkzeug wird nun immer näher an das Werkstück herangeführt, bis ein Funken überschlägt, welcher das Material punktförmig aufschlitzt und verdampft. Alternativ ist auch ein elektrochemisches Verfahren anwendbar. Dabei wird eine Elektrolytlösung, z. B. eine wässrige Lösung von Natriumchlorit oder Natriumnitrat, in den Arbeitsspalt zwischen Werkstück und Werkzeug eingebracht, wobei der durch die zwischen Werkstück und Werkzeug angelegte Spannung entstehende Elektronenstrom Metallionen vom Werkstück löst.

Durch diese Verfahren bei der Einbringung der Auslasskanäle für das Kühlmedium ist einerseits eine sehr hohe Präzision erreichbar, andererseits ist die Turbinenschaufel durch die fehlende mechanische Einwirkung keinem Verschleiß ausgesetzt, was wiederum eine längere Lebensdauer der Turbinenschaufel zur Folge hat.

In einer weiteren vorteilhaften Ausgestaltung kann die Einbringung der Auslasskanäle für das Kühlmedium durch eine Bohrung, insbesondere mithilfe eines Lasers erfolgen. Durch den Laserstrahl wird das Schaufelmaterial an der betroffenen Stelle ionisiert und verdampft. Dieses Verfahren ist besonders gut automatisierbar und daher für die Serienproduktion von Turbinenschaufeln geeignet, zudem ist aufgrund der fehlenden mechanischen Belastung des Werkstücks beim Bohrprozess kein unnötiger Verschleiß gegeben, wodurch die Lebensdauer der Turbinenschaufel weiter erhöht wird.

Um einen besseren Wärmeübertrag von der Turbinenschaufel auf das durch die Auslasskanäle geführte Kühlmedium zu erzielen, wird in den jeweiligen Auslasskanal vorzugsweise ein turbulenzerzeugendes Innenprofil eingebracht. Derartige Innenprofile werden auch als Turbulatorprofile bezeichnet, da sie eine laminare Strömung des Kühlmediums durch die Auslasskanäle brechen und Turbulenzen erzeugen, welche einen besseren Wärmeübertrag zur Folge haben. Dadurch wird die Kühlung der Turbinenschaufeln insgesamt effektiver und es wird wiederum eine längere Lebensdauer der Turbinenschaufel erreicht.

Die beschriebene Turbinenschaufel, bei der im Bereich der Hinterkante eine Anzahl von Auslasskanälen für ein Kühlmedium derart von außen eingebracht wird, dass die Austrittsöffnungen der Auslasskanäle in Bezug auf die Hinterkante zur druckseitigen Schaufelwand hin versetzt angeordnet sind, ist zweckmäßigerweise Bestandteil einer Gasturbine. Insbesondere kann es sich bei der Turbinenschaufel um eine Leitschaufel handeln. Dabei kann jeweils eine Anzahl dieser Leitschaufeln in einer Anzahl von Leitschaufelreihen zusammengefasst sein. Entsprechendes gilt im Falle von Laufschaufeln. Eine derartige Gasturbine ist durch die besonders lange Lebensdauer der Turbinenschaufeln besonders reparaturunanfällig.

Die mit der Erfindung erzielten Vorteile bestehen insbesondere darin, dass durch die in Bezug auf die Hinterkante zur druckseitigen Schaufelwand hin versetzte Anordnung der Austrittsöffnungen der Auslasskanäle die aerodynamisch optimale dünne Hinterkante mit den bezüglich der Kühlluftanpassung bevorzugten gebohrten Auslasskanälen verbunden werden kann. Durch die günstige Aerodynamik und die bessere Dosierbarkeit der in die Turbinenschaufel eingebrachten Kühlluft wird insgesamt ein besonders hoher Wirkungsgrad der Gasturbine erreicht. Zudem ist durch die gebohrten Auslasskanäle eine vergleichsweise bessere Kühlung der Hinterkante der Turbinenschaufel möglich, wodurch die Lebensdauer erhöht wird und daher insgesamt die Gasturbine vergleichsweise weniger reparaturanfällig im Betrieb ist.

Ein Ausführungsbeispiel der Erfindung wird anhand einer Zeichnung näher erläutert. Darin zeigen:
- FIG 1: einen Längsschnitt durch eine Gasturbine,
- FIG 2: einen Gusskern für den Guss einer Turbinenschaufel,
- FIG 3: eine Turbinenschaufel direkt nach dem Guss,
- FIG 4: eine Turbinenschaufel nach dem Einbringen der Auslasskanäle für ein Kühlmedium, und
- FIG 5: eine fertig gestellte Turbinenschaufel im Profil.

Gleiche Teile sind in allen Figuren mit denselben Bezugszeichen versehen.

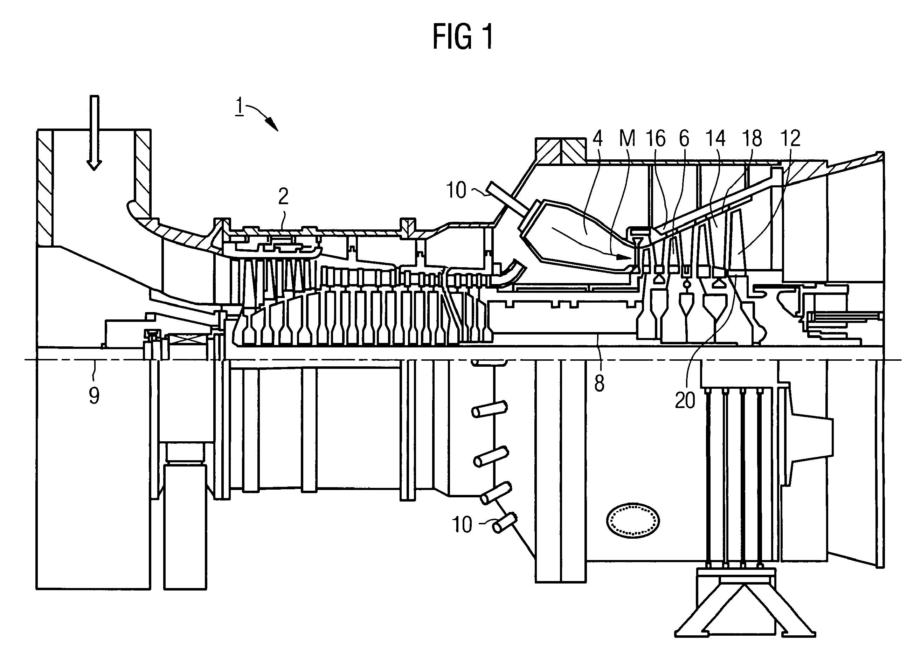

Die Gasturbine 1 gemäß FIG 1 weist einen Verdichter 2 für Verbrennungsluft, eine Brennkammer 4 sowie eine Turbine 6 zum Antrieb des Verdichters 2 und eines nicht dargestellten Generators oder einer Arbeitsmaschine auf. Dazu sind die Turbine 6 und der Verdichter 2 auf einer gemeinsamen, auch als Turbinenläufer bezeichneten Turbinenwelle 8 angeordnet, mit der auch der Generator bzw. die Arbeitsmaschine verbunden ist, und die um ihre Mittelachse 9 drehbar gelagert ist.

Die in der Art einer Ringbrennkammer ausgeführte Brennkammer 4 ist mit einer Anzahl von Brennern 10 zur Verbrennung eines flüssigen oder gasförmigen Brennstoffs bestückt. Sie ist weiterhin an ihrer Innenwand mit nicht näher dargestellten Hitzeschildelementen versehen.

Die Turbine 6 weist eine Anzahl von mit der Turbinenwelle 8 verbundenen, rotierbaren Laufschaufeln 12 auf. Die Laufschaufeln 12 sind kranzförmig an der Turbinenwelle 8 angeordnet und bilden somit eine Anzahl von Laufschaufelreihen. Weiterhin umfasst die Turbine 6 eine Anzahl von feststehenden Leitschaufeln 14, die ebenfalls kranzförmig unter der Bildung von Leitschaufelreihen an einem Innengehäuse 16 der Turbine 6 befestigt sind. Die Laufschaufeln 12 dienen dabei zum Antrieb der Turbinenwelle 8 durch Impulsübertrag vom die Turbine 6 durchströmenden Arbeitsmedium M. Die Leitschaufeln 14 dienen hingegen zur Strömungsführung des Arbeitsmediums M zwischen jeweils zwei in Strömungsrichtung des Arbeitsmediums M gesehen aufeinander folgenden Laufschaufelreihen oder Laufschaufelkränzen. Ein aufeinander folgendes Paar aus einem Kranz von Leitschaufeln 14 oder einer Leitschaufelreihe und aus einem Kranz von Laufschaufeln 12 oder einer Laufschaufelreihe wird dabei auch als Turbinenstufe bezeichnet.

Jede Leitschaufel 14 weist eine auch als Schaufelfuß bezeichnete Plattform 18 auf, die zur Fixierung der jeweiligen Leitschaufel 14 am Innengehäuse 16 der Turbine 6 als Wandelement angeordnet ist. Die Plattform 18 ist dabei ein thermisch vergleichsweise stark belastetes Bauteil, das die äußere Begrenzung eines Heißgaskanals für das die Turbine 6 durchströmende Arbeitsmedium M bildet. Jede Laufschaufel 12 ist in analoger Weise über eine auch als Schaufelfuß bezeichnete Plattform 20 an der Turbinenwelle 8 befestigt.

Zur Erzielung eines vergleichsweise hohen Wirkungsgrades ist die Gasturbine 1 für eine vergleichsweise hohe Austrittstemperatur des aus der Brennkammer 4 austretenden Arbeitsmediums M von etwa 1200 °C bis 1500 °C ausgelegt. Um dabei auch eine hohe Lebensdauer oder Betriebsdauer der Gasturbine 1 zu gewährleisten, sind deren wesentliche Komponenten, insbesondere die Turbinenschaufeln 15 (d. h. die Leitschaufeln 14 und/oder die Laufschaufeln 12), kühlbar ausgebildet.

Zur Kühlung einer Turbinenschaufel 15, insbesondere einer Leitschaufel 14, ist Kühlluft K vorgesehen, die ins Innere der Turbinenschaufel 15 strömt, um insbesondere die Außenwände von innen her zu kühlen. Ein Teil dieser Kühlluft K verlässt aus endseitig angeordneten Austrittsöffnungen die Turbinenschaufel 15, um den besonders hitzeempfindlichen Hinterkantenbereich 21 mit der Hinterkante 22 zu kühlen.

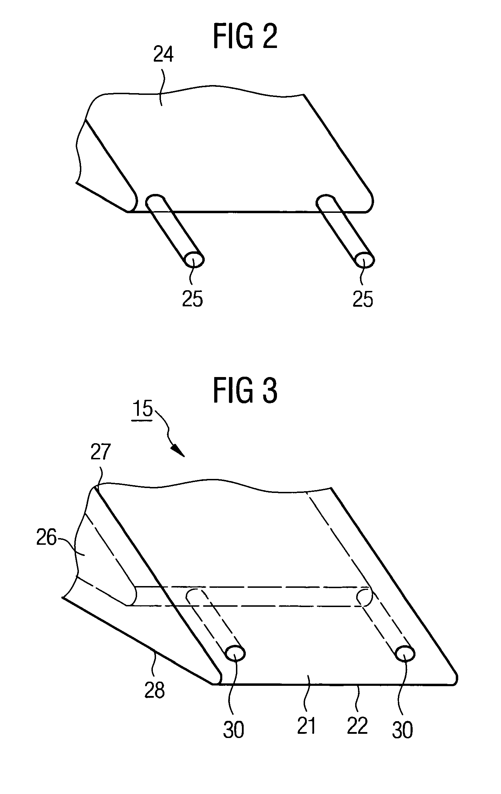

Die FIG 2 bis 4 zeigen beispielhaft verschiedene Stadien des Gussprozesses einer Hinterkante nach dem vorgeschlagenen Verfahren. Um die für die Durchleitung von Kühlmedium notwendigen Hohlräume innerhalb der Turbinenschaufeln zu erzeugen, wird zunächst ein Gusskern 24 geformt. Dazu kann beispielsweise das Kernschießverfahren benutzt werden, bei dem mit Bindemittel versetzter Formsand in eine nicht näher gezeigte Kernform gepresst wird. Dieser Gusskern 24 kann dann in eine hier nicht näher gezeigte Außenform eingebaut werden und nach dem erfolgten Guss durch im Gussstück platzierte Öffnungen entfernt werden. In der FIG 2 sind dem Gusskern 24 zylinderförmige Fortsätze 25 angeformt, die beim Einbringen in die nicht näher gezeigte Außenform mit dieser verbunden werden können und dadurch die Lage des Gusskerns 24 innerhalb der Außenform stabilisieren. Weiterhin erzeugen die Fortsätze 25 im fertigen Gussstück Öffnungen, durch die einerseits der Gusskern 24 nach dem Gussprozess entfernt werden kann, und an denen andererseits die Einbringung der noch zu beschreibenden Bohrungen 29 in das fertige Gusstück ausgerichtet werden kann.

FIG 3 zeigt das fertige Gussstück - die Turbinenschaufel 15 - direkt nach dem Guss und dem Entfernen der nicht näher gezeigten Außenform und des Gusskerns 24. Die Turbinenschaufel 15 weist eine druckseitige Schaufelwand 27 sowie eine sogseitige Schaufelwand 28 auf. Diese Schaufelwände laufen keilförmig in dem Hinterkantenbereich 21 zusammen und bilden eine Hinterkante 22. Um einen möglichst hohen Wirkungsgrad der Gasturbine 1 zu erreichen, sollte die Turbinenschaufel 15 aerodynamisch besonders günstig ausgebildet sein. Dazu sollte insbesondere die Hinterkante 22 unter Berücksichtigung der für die Stabilität notwendigen Materialdicke möglichst dünn gehalten sein. Weiterhin hat die Turbinenschaufel 15 einen Hohlraum 26, der durch den Gusskern 24 und dessen Fortsätze 25 am Guss gebildet wurde. Durch die Verbindung der Fortsätze 25 mit der nicht näher gezeigten Außenform sind Öffnungen 30 entstanden, die im weiteren Verlauf des Herstellungsverfahrens zur Ausrichtung der noch einzubringenden Auslasskanäle 29 geeignet sind.

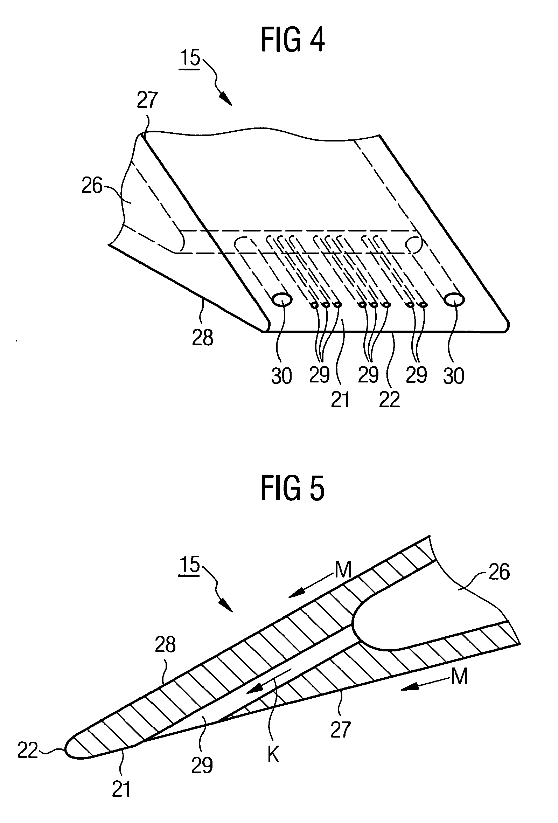

FIG 4 zeigt die Turbinenschaufel 15 mit den eingebrachten Bohrungen 29. Durch die Verbindung der Fortsätze 25 des Gusskerns 24 mit der nicht näher gezeigten Außenform ist nun einerseits die Toleranz der geometrischen Lage des Hohlraums 26 vergleichsweise gering, andererseits kann durch die entstandenen Öffnungen 30 die einen Auslasskanal bildende Bohrung direkt an diesen Öffnungen 30 ausgerichtet werden.

Vorzugsweise liegen die Bohrungen auf einer gedachten Verbindungsgeraden, welche die Öffnungen 30 miteinander verbindet. Hierdurch wird erreicht, dass die dem Hohlraum zugewandten Enden der Auslasskanäle stets vollständig in diesem münden. Verschiedene Verfahren zur Einbringung der Auslasskanäle sind hierbei denkbar: Beispielsweise kann ein erodierendes Verfahren angewandt werden wie z. B. das elektro-chemische Abtragen (ECM) oder das Funkenerodieren (EDM). Als Erodierwerkzeug könnte beispielsweise ein kammartiges Element mit Führungszinken und Bohrungszinken verwendet werden. Die Führungszinken des Kamms sind dabei in die Öffnungen 30 einzuführen, wodurch der Kamm dann ausgerichtet ist. Die anderen, zwischen den beiden Führungszinken angeordneten Bohrungszinken dienen dann zur Herstellung der Anlasskanäle. Zweckmäßiger Weise sind die beiden Führungszinken länger als die dazwischen angeordneten Bohrungszinken, so dass bereits eine Ausrichtung der Werkzeugs erfolgt, noch bevor mit dem Bohrvorgang angefangen wird.

Alternativ kann auch ein Laser zur Einbringung der Auslasskanäle 29 verwendet werden. In die Auslasskanäle 29 kann zudem ein turbulenzerzeugendes Innenprofil eingebracht werden, wodurch der Wärmeübertrag zwischen Turbinenschaufel und Kühlmedium weiter verbessert wird.

Um eine gute und zuverlässige Abstützung des Gusskerns 24 an der Außenform zu erhalten, weisen die Fortsätze 25 einen Mindestdurchmesser auf. Der Mindestdurchmesser kann dabei größer sein als der Durchmesser jedes Auslasskanals, sofern dies zweckdienlich ist. Dies führt zwar zu einer zu großen Ausblasung von Kühlluft, was aber aufgrund ihrer geringen Anzahl hingenommen werden kann.

FIG 5 zeigt nun ein Profil der Turbinenschaufel 15 mit der druckseitigen Schaufelwand 27, der sogseitigen Schaufelwand 28 und einem Hohlraum 26, wobei im Hinterkantenbereich 21 der Turbinenschaufel 15 in Bezug auf die Hinterkante 22 zur druckseitigen Schaufelwand 27 hin versetzt die Auslasskanäle 29 eingebracht wurden. Dabei sollte zur Stabilisierung der sogseitigen Schaufelwand 28 insbesondere im Hinterkantenbereich 21 eine Mindestwanddicke eingehalten werden, um die Stabilität der Turbinenschaufel im Betrieb zu verbessern. Um ein gleichmäßige Wanddicke der sogseitigen Schaufelwand 28 zu gewährleisten, kann der Auslasskanal 29 parallel zur sogseitigen Schaufelwand 28 eingebracht werden.

FIG 5 zeigt, dass beim gezeigten Verfahren einerseits eine aerodynamisch günstige besonders dünne Hinterkante 22 erreicht werden kann, andererseits durch die nachträgliche Einbringung der Auslasskanäle 29 Menge und Ausrichtung der austretenden Kühlluft besonders gut dosiert werden können.

## Patentansprüche

1. Verfahren zur Herstellung einer innengekühlten Turbinenschaufel (15) mit einer sogseitigen und einer druckseitigen Schaufelwand (27, 28), die keilförmig auf eine gemeinsame Hinterkante (22) zulaufen,
bei dem ein Hohlraum (26) einer Gussform, die eine Außenform und einen Gusskern (24) aufweist, mit einem Schaufelwerkstoff ausgegossen wird,
wobei nach dem Aushärten der Turbinenschaufel (15) im Bereich der Hinterkante (22) eine Anzahl von Auslasskanälen (29) für ein Kühlmedium derart von außen eingebracht wird,
dass die Austrittsöffnungen der Auslasskanäle (29) in Bezug auf die Hinterkante (22) zur druckseitigen Schaufelwand hin versetzt angeordnet sind.

2. Verfahren nach Anspruch 1,
bei dem dem Gusskern (24) eine Anzahl von Fortsätzen (25) angeformt ist, die mit der Außenform derart verbunden sind, dass die durch die Fortsätze beim Guss entstehenden Öffnungen (30) in der Turbinenschaufel (15) in Bezug auf die Hinterkante (22) zur druckseitigen Schaufelwand (27) hin versetzt angeordnet sind.

3. Verfahren nach Anspruch 2,
bei dem ein Werkzeug zur Einbringung der Auslasskanäle (29) für das Kühlmedium an den entstandenen Öffnungen (30) ausgerichtet wird.

4. Verfahren nach einem der Ansprüche 1 bis 3,
bei dem die Auslasskanäle (29) für das Kühlmedium derart positioniert werden, dass eine Mindestwandstärke der sogseitigen Schaufelwand (28) eingehalten wird.

5. Verfahren nach einem der Ansprüche 1 bis 4,
bei dem der jeweilige Auslasskanal (29) parallel zur sogseitigen Schaufelwand (28) ausgerichtet wird.

6. Verfahren nach einem der Ansprüche 1 bis 5,
bei dem der jeweilige Auslasskanal (29) erodiert wird.

7. Verfahren nach einem der Ansprüche 1 bis 6,
bei dem der jeweilige Auslasskanal (29) gebohrt wird.

8. Verfahren nach einem der Ansprüche 1 bis 7,
bei dem in den jeweiligen Auslasskanal (29) ein turbulenzerzeugendes Innenprofil eingebracht wird.

9. Turbinenschaufel (15),
hergestellt nach dem Verfahren nach einem der Ansprüche 1 bis 8.

10. Turbinenschaufel (15) nach Anspruch 9,
bei der die Öffnung (30) einen größeren Durchmesser aufweist als der Auslasskanal (29).

11. Gasturbine (1) mit einer Anzahl von Turbinenschaufeln (15) nach Anspruch 9 oder 10.
